# EUROPEAN PATENT APPLICATION

(11) **EP 4 765 336 A1**
(43) Date of publication of application: **24.06.2026**
(21) Application number: 25225103.8
(22) Date of filing: 18.12.2025
(51) Int. Cl.: H01M 10/625, H01M 10/653, H01M 10/658, H01M 50/289, H01M 50/291, H01M 50/293, H01M 10/647, H01M 10/48

(54) **ELECTRICAL ENERGY STORAGE DEVICE FOR A MOTOR VEHICLE AND RELATIVE ASSEMBLY METHOD**

(30) Priority: 20.12.2024 IT 202400029343
(71) Applicant: FERRARI S.p.A., 41100 Modena (IT)
(72) Inventor: LERRA, Flavia, 41100 MODENA (IT); PULLARA, Calogero, 41100 MODENA (IT); VENTURI, Enrico, 41100 MODENA (IT); ZAMPOLINI, Federico, 41100 MODENA (IT)
(74) Representative: Studio Torta S.p.A.

(57) **Abstract**

A device (1) for the storage of electrical energy for a motor vehicle (100) comprising a casing (2) defining an inner volume (3) and electrochemical cells (4) housed in the inner volume (3) and brought together along a direction (X). The device (1) comprises a foam element of a first type (5a) interposed between a first pair of electrochemical cells (4) along the direction (X) and a foam element of a second type (5b) interposed between a second pair of electrochemical cells (4) along the direction (X).

## Description

### CROSS-REFERENCE TO RELATED APPLICATIONS

This patent application claims priority from Italian patent application no. 102024000029343 filed on December 20, 2024, the entire disclosure of which is incorporated herein by reference.

### TECHNICAL FIELD

The invention relates to an electrical energy storage device, in particular an electric battery for a motor vehicle. The invention also relates to an assembly method for assembling an electrical energy storage device.

### BACKGROUND

Motor vehicles are known, which basically comprise:
- a frame;
- a plurality of wheels, which can rotate relative to the frame about respective rotation axes;
- an electric motor operatively connected to at least some of the wheels; and
- an electrical energy storage device electrically connected to the electric motor, for example an electric battery.

As it is known, electric batteries generally comprise a casing housing, inside which a plurality of electrochemical cells are housed, which are electrically connected to one another and stacked or brought together along one direction. It is also known that electric batteries undergo volume variations during their charging and discharging processes and tend to increase in volume with ageing.

In order for electrochemical cells to function properly, they must be subjected to well-defined compressive forces along the aforementioned direction. Specifically, said compression forces should be as close as possible to a target value at the beginning of the life of the electric battery. At the same time, it is advisable that the compression forces, which generally tend to increase in magnitude over time, do not reach too high values as the useful life of the electric battery approaches the end. In fact, too high compression forces are potentially relevant for the electrical safety of the electrochemical cells and for the structural integrity of the casing.

Compression forces can be imparted by clamping the electrochemical cells inside the casing between special elastic foam elements. Said foam elements are interposed between the electrochemical cells along said direction and are adapted to compensate for volume variations of the electrochemical cells during operation. However, this technical solution leaves room for improvements.

In fact, the extension of the electrochemical cells along said direction is generally variable within a certain range of dimensional tolerances.

In addition, the compression forces acting upon the electrochemical cells depend on the compression rate of the foam elements and said compression rate depends, in turn, on the thickness of the electrochemical cells.

The variability of the thickness of the electrochemical cells, therefore, makes it complex to accurately achieve forces of sufficient magnitude to compress the electrochemical cells.

To compensate for the variability of the thickness of the electrochemical cells, it is common to use foam elements with thicknesses greater than the values strictly necessary considering the nominal value of the thickness of the cells. In fact, thicker foam elements are able to better compensate for the dimensional tolerances of the electrochemical cells compared to foam elements with a smaller thickness. This oversizing of the foam elements, however, does not always allow the space defined by the casing of the electric batteries to be used efficiently and generally contributes to an unwanted increase in the weight of the batteries themselves.

On the other hand, the use of a foam element with a thinner thickness risks not guaranteeing the achievement of the target value of the compression forces at the beginning of the life of the electric battery. At the same time, foam elements with a smaller thickness generally are less effective in counteracting the increase in volume to which electrochemical cells are subjected over time.

It should be noted that the achievement of compression forces close to the target value is complicated to a greater extent by the fact electric batteries sometimes comprise further components, for example heat dissipation elements or electrically or thermally insulating elements. Since the thickness of these additional components also varies within a range of dimensional tolerances, the additional components contribute to defining the chain of tolerances to be compensated.

Therefore, in the industry there is a need to obtain adequate compression forces of the electrochemical cells located inside the electric batteries, despite the thickness variability of the electrochemical cells and any other components of the electric batteries.

An object of the invention is to fulfil the need discussed above, preferably in a simple and cost-effective fashion.

### DESCRIPTION OF THE INVENTION

Said object is reached by an electrical energy storage device and by an assembly method for assembling an electrical energy storage device as defined in the independent claims.

The dependent claims define special embodiments of the invention.

### BRIEF DESCRIPTION OF THE DRAWINGS

Hereinafter, an embodiment of the invention is described, in order to allow the latter to be better understood, by way of non-limiting example and with reference to the accompanying drawings, wherein:
- figure 1 is a schematic cross-sectional view of an electrical energy storage device according to the invention, with parts removed for greater clarity;
- figure 2 shows a stress-strain diagram relating to three different materials.

### EMBODIMENTS OF THE INVENTION

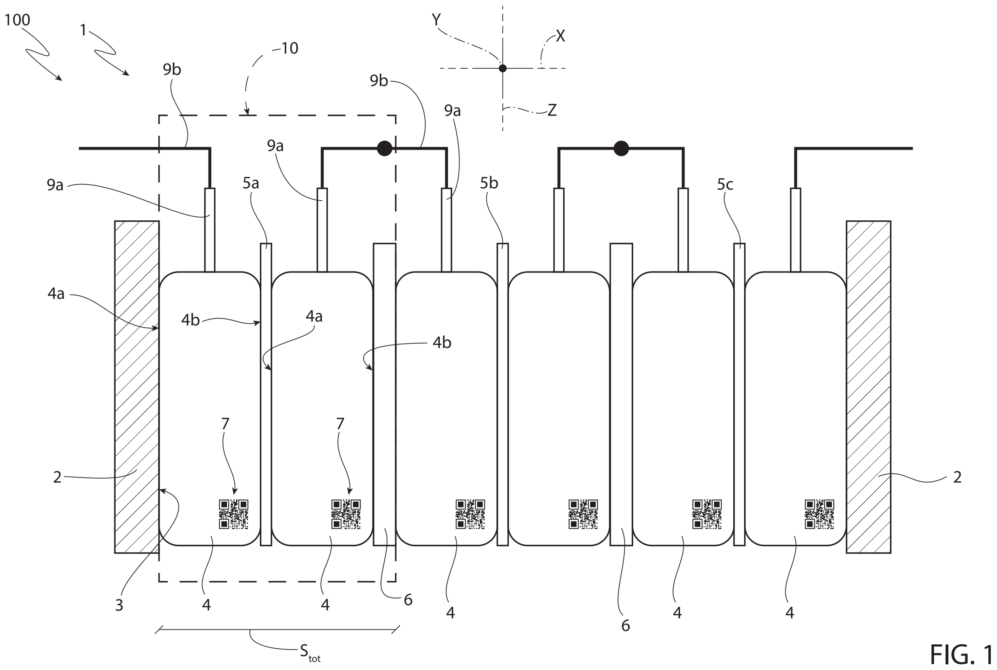

In figure 1, reference number 100 is used to indicate, as a whole, a motor vehicle - only partly shown - comprising an electrical energy storage device 1 according to the invention.

Preferably, though not necessarily, the motor vehicle 100 is an electric or hybrid vehicle and comprises, in a known manner, a frame, a plurality of wheels, which can rotate relative to the frame about respective rotation axes, and an electric motor operatively connected to at least some of the wheels and electrically connected to the device 1. Alternatively, the motor vehicle 100 is of the type with thermal propulsion.

The device 1 is an electric battery and comprises a casing 2 defining an inner volume 3 and a plurality of electrochemical cells 4 housed in said inner volume 3. For example, the electrochemical cells 4 are lithium-ion cells.

The device 1 can be associated with an integral reference system comprising a direction x, a direction Y and a direction Z, which are transversal to one another. Preferably, the directions X, Y and Z are orthogonal to one another. In addition, preferably, the direction Z is vertical to the ground on which the motor vehicle 100 rests; the direction X is parallel to a longitudinal extension direction of the motor vehicle 100.

In the non-limiting embodiment shown herein, the electrochemical cells 4 have a parallelepiped shape and are of the pouch type. In particular, considering the direction X, each electrochemical cell 4 comprises two faces 4a, 4b, which are flat and opposed to one another.

As shown in Figure 1, the electrochemical cells 4 are brought together along the direction X. In particular, each electrochemical cell 4 can be associated with a relative extension parallel to the direction X, hereinafter indicated as thickness.

In the embodiment shown herein, the thickness of the electrochemical cells 4 is constant along the direction Z. However, in the event that the thickness of the electrochemical cells 4 is variable along the direction Z, the expression "thickness" can be understood as the maximum extension of the electrochemical cells 4 parallel to the direction X.

Specifically, the thickness of the electrochemical cells 4 is potentially variable within a range of dimensional tolerance. In other words, the thickness of an electrochemical cell 4 could deviate from a nominal thickness defined during the design phase, for example as a consequence of the level of precision of the production process of the electrochemical cells 4.

In a known manner, the tolerance range extends from a lower limit (for example, equal to the nominal thickness minus 0.25 mm) to an upper limit (for example, equal to the nominal thickness plus 0.25 mm).

Still by way of example, the tolerance range can be divided into three sub-ranges. In particular, the tolerance range could comprise:
- a first sub-range, which comprises all the values ranging from the lower limit to a first value, which is greater than the lower limit and smaller than the nominal thickness;
- a second sub-range, which comprises all values ranging from the first value to a second value, which is greater than the nominal thickness and smaller than the upper limit; and
- a third sub-range, which comprises all the values ranging from the second value to the upper limit.

It is also possible to define electrochemical cells 4 arranged consecutively to each other along direction X. In detail, two electrochemical cells 4 are consecutively arranged if no other electrochemical cell 4 is interposed between them. In other words, two electrochemical cells 4 are consecutive when they are arranged one after the other along the X direction.

At least some of the electrochemical cells 4 are electrically connected to one another. To this purpose, each electrochemical cell 4 comprises a conductor element 9a for the electrical connection of the electrochemical cells 4 to one another. In particular, the conductor elements 9a of different electrochemical cells 4 are electrically connected to one another, for example by means of electrical cables 9b.

Preferably, each electrochemical cell 4 comprises an identifier 7 adapted to encode information and configured to provide said information, when interrogated by a suitable reader device. In detail, the identifier 7 comprises a two-dimensional bar code, for example a QR code. In further detail, the QR code is adapted to be scanned by an optical reader device, for example a smartphone.

Specifically, the information encoded by the identifier 7 relates to the actual thickness, for example measured or determined in a previous preparatory phase, of the relative electrochemical cell 4. Alternatively or in addition, the information encoded by the identifier 7 relates to whether the actual thickness of the relative electrochemical cell 4 belongs to the first sub-range, the second sub-range or the third sub-range.

The device 1 further comprises a plurality of heat dissipation elements 6. In detail, each heat dissipation element 6 is interposed between a respective pair of electrochemical cells 4 along the direction X. In further detail, the heat dissipation elements 6 are bodies having or substantially having the shape of a parallelepiped and are made of a metal material. For example, the heat dissipation elements are made of aluminium.

Each heat dissipation element 6 can also be associated with a relative extension parallel to the direction X, hereinafter indicated as thickness. Specifically, the thickness of the heat dissipation elements 6 is potentially variable within a tolerance range.

Preferably, the heat dissipation elements 6 also comprise an identifier similar to the identifier 7 and adapted to encode information relating to the actual thickness of the relative heat dissipation element 6.

The device 1 advantageously comprises:
- at least one foam element of a first type 5a interposed between a first pair of electrochemical cells 4 along the direction X;
- at least one foam element of a second type 5b interposed between a second pair of electrochemical cells 4 along the direction X; and
- at least a foam element of a third type 5c interposed between a third pair of electrochemical cells 4 along the direction X.

The foam elements of the first, second and third types 5a, 5b, 5c are different from one another. In detail, the foam elements of the first type, of the second type and of the third type 5a, 5b, 5c differ from one another because they have respective different extensions along the direction X and/or respective different elastic properties and/or respective different chemical compositions. By way of non-limiting example, the extension of each foam element 5a, 5b, 5c along the direction X is different from the extension of the other foam elements 5a, 5b, 5c by a value ranging from 10% to 50%.

The foam elements 5a, 5b, 5c could also have different thermal properties (heat conductivity, fire resistance, etc.). Preferably, though not necessarily, the foam elements 5a, 5b, 5c have thermally insulating properties. This allows the electrochemical cells 4 to be insulated from any faults or malfunctions of nearby electrochemical cells 4 (for example, short circuits, thermal runway, etc.).

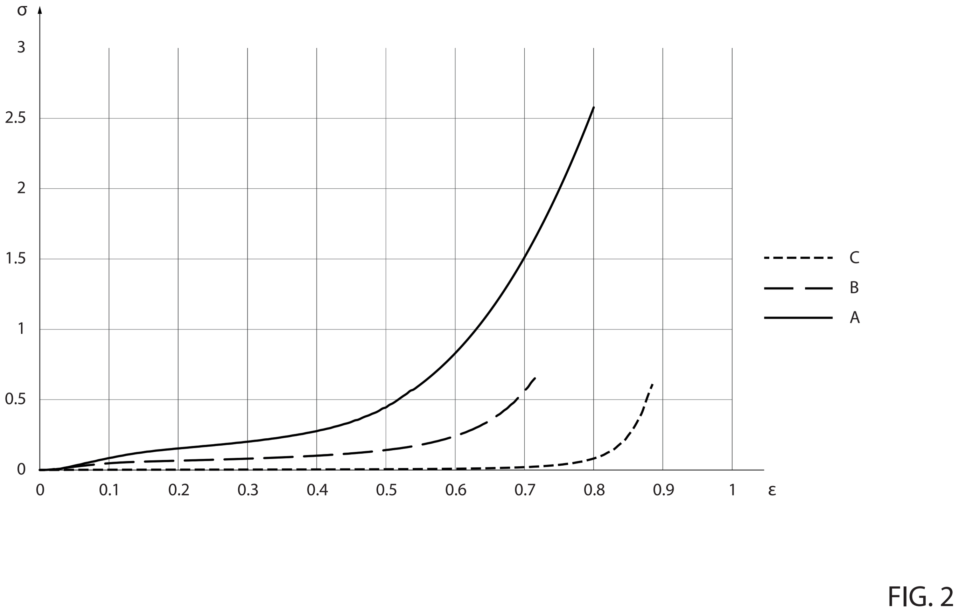

Figure 2 shows, by way of example, the stress-strain diagram of three materials, of which the foam elements of the first type, of the second type and of the third type 5a, 5b, 5c are made, respectively. Specifically, the diagram of Figure 2 comprises three curves A, B and C, each associated with a respective different material.

The three curves A, B and C have different trends; consequently, the three materials with which they are associated have different mechanical characteristics (stiffness, elasticity and/or breaking load, etc.).

Preferably, the foam elements 5a, 5b, 5c are made of one or more of the following materials:
- polyurethane;
- silicone;
- ceramic materials;
- aerogel; and
- glass fibre.

Preferably, furthermore, the foam elements 5a, 5b, 5c have the shape of a parallelepiped. In particular, the foam elements 5a, 5b, 5c have the shape of a plate.

In the embodiment shown in Figure 1, the device 1 comprises a plurality of modules 10, each comprising:
- a pair of electrochemical cells 4;
- a foam element 5a, 5b or 5c; and
- a heat dissipation element 6.

In detail, the foam element 5a, 5b, 5c of each module 10 is interposed between the two electrochemical cells 4 and is in contact with both of them along the direction X. In addition, the heat dissipation element 6 is located on the side of one of the two electrochemical cells 4 facing the other one of the two electrochemical cells 4 along the direction X.

The electrochemical cells 4 are subjected to compression forces acting along the direction X. In particular, an adequate value of the compression forces is a value greater than a minimum value needed for the correct operation of the electrochemical cells 4 and, at the same time, smaller than a maximum value that can be tolerated from the point of view of the structural resistance and safety of the electrochemical cells 4.

The operation of the device 1 and of the motor vehicle 100 is described below.

In use, during the use of the motor vehicle 100, the device 1 is subjected to electrical charging and electrical discharging cycles and supplies electrical energy to the electric motor and/or to the other electric or electronic devices of the motor vehicle 100. In the electrical charging and discharging cycles, the electrochemical cells 4 undergo volume variations. The electrochemical cells 4 also tend to increase in volume over time also due to ageing. These volume changes over time correspond to temporal changes in the thickness of the electrochemical cells 4.

The volume variations of the electrochemical cells 4 are compensated by the foam elements 5a, 5b, 5c, which compress or expand as needed along the direction X.

In addition, the heat generated by the electrochemical cells 4 is dispersed outside the inner volume 3 through the heat dissipation elements 6. Specifically, in a known manner, the heat dissipation elements 6 transfer heat to respective cooling fins (not shown) made of a material with a high heat conductivity. The cooling fins, in turn, transmit heat to some dissipation plates, which exchange heat with air or a cooling fluid.

The assembly of the device 1 will be described below.

Preferably, the assembly is preceded by a design step, in which three types of foam elements 5a, 5b, 5c that are potentially usable for the modules 10 are chosen as a function of the actual thickness of the electrochemical cells 4 and taking into account the space available for housing the modules 10 within the device 1.

For the sake of completeness, it should be noted that the number of types of foam elements chosen during the design step could be different, in particular greater than three.

In detail, this design step can be carried out by means of experimentation or virtual simulation and comprises:
- choosing electrochemical cells 4 having a thickness belonging to the first sub-range;
- forming a stack along a direction, for example a vertical direction, by stacking the chosen electrochemical cells 4 and the heat dissipation elements 6 together and interposing a foam element to be evaluated between each pair of electrochemical cells 4 along the aforementioned direction;
- applying a compression force to the stack along the aforementioned direction. Specifically, compression forces of a different, in particular increasing, magnitude are applied iteratively until the extension of the stack along the aforementioned direction is smaller than or equal to the available space;
- considering the foam element subjected to the evaluation as acceptable, if the magnitude of the compression force for which the extension of the stack along the aforementioned direction is smaller than or equal to the available space is comprised between the minimum value and the maximum tolerable value.

In fact, if this condition is verified, a module 10 inserted inside the casing 2 and comprising two electrochemical cells 4 having a thickness belonging to the first sub-range, the heat dissipation element 6 and the foam element considered acceptable is subjected to a compression force of an adequate magnitude.

On the other hand, if the extension of the stack is greater than the available space, it will be necessary to repeat the design step using a foam element with a smaller stiffness.

The steps listed above are repeated considering electrochemical cells 4 having a thickness belonging to the second sub-range and electrochemical cells 4 having a thickness belonging to the third sub-range. In this way, a respective acceptable foam element 5a, 5b, 5c is preliminarily associated with each sub-range.

Preferably, the assembly is carried out by first assembling a plurality of modules 10 and by subsequently placing the modules 10 in the inner volume 3.

First of all, for each module 10, the actual thickness of two electrochemical cells 4 and of a heat dissipation element 6 is detected and/or determined. In detail, the thickness can be measured (for example, by means of a gauge or a contactless measuring instrument) or obtained by scanning the identifier 7 affixed to the electrochemical cells 4 and to the heat dissipation element 6.

Next, the foam element 5a, 5b, 5c to be included in the module 10 is chosen. In particular, the average value of the actual thickness of the two chosen electrochemical cells 4 is determined or calculated and the foam element 5a, 5b, 5c to be inserted is determined depending on whether said average value belongs to the first sub-range, the second sub-range or the third sub-range.

For example, if the actual average thickness of the electrochemical cells 4 of the module 10 falls in the first sub-range, the module 10 is equipped with a foam element of the first type 5a; if the actual average thickness of the electrochemical cells 4 of the module 10 falls in the second sub-range, the module 10 is equipped with a foam element of the second type 5b; if the actual average thickness of the electrochemical cells 4 of the module 10 falls in the third sub-range, the module 10 is equipped with a foam element of the third type 5c.

The foam element 5a, 5b, 5c as determined is then interposed between the two electrochemical cells 4, in such a way that it abuts against the face 4a of one of the two electrochemical cells 4 and against the face 4b of the other one of the two electrochemical cells 4.

The assembly of the module 10 is completed by inserting a heat dissipation element 6 in contact with one of the two electrochemical cells 4.

Once the assembly of a module 10 has been completed, the set-up of the device 1 continues with the assembly of other modules 10.

The various assembled modules 10 are then inserted into the inner volume 3, until it is filled. At this point, the electrochemical cells 4 are subjected to the compression forces acting parallel to the direction X.

The conductor elements 9a are then connected to one another (for example, by means of a welding operation), obtaining the electrical connection between different electrochemical cells 4.

The design step described above could be carried out in order to choose three types of foam elements 5a, 5b, 5c that can be used for the modules 10 not only according to the actual thickness of the electrochemical cells 4, but also according to the actual thickness of the heat dissipation element 6. Similarly, the choice of the foam element 5a, 5b, 5c during the assembly of the modules 10 can be made not only as a function of the actual thickness of the electrochemical cells 4, but also as a function of the actual thickness of the heat dissipation element 6.

Owing to the above, the advantages of the invention are evident.

Since the assembly of the device 1 entails the step of choosing between foam elements 5a, 5b, 5c of at least two different types, it is possible to accurately control the compression of the electrochemical cells 4 upon assembly of the device 1 itself. In fact, the foam elements 5a, 5b, 5c have different thickness and/or stiffness and/or chemical composition and this makes it possible to compensate for the actual thickness variability of the electrochemical cells 4 and possibly of the heat dissipation elements 6.

The invention defines a strategy for selecting - during assembly - the foam elements 5a, 5b, 5c (possibly, from a predetermined set of acceptable foam elements) to be inserted in each module 10 according to the actual dimensions of the electrochemical cells 4 and possibly of the heat dissipation elements 6, ensuring adequate compression forces of the electrochemical cells 4.

Since the electrochemical cells 4 comprise the identifiers 7, it is possible to easily know the actual thickness of the respective electrochemical cells 4 during assembly operations.

In addition, the foam elements 5a, 5b, 5c that can be chosen during assembly are predetermined in a design step, in which the compression forces acting upon the module 10 are evaluated and the mechanical properties of the foam elements are taken into account. This makes it possible to simplify the step of choosing the foam elements 5a, 5b, 5c during assembly, since this choice is made on the basis of one single parameter or, in any case, of a small number of parameters. In fact, from a practical point of view, the choice is made during assembly on the basis of the average actual thickness of the electrochemical cells 4 and possibly of the heat dissipation elements 6 and not also on the basis of extemporaneous evaluations of the mechanical and/or chemical characteristics of the foam elements.

Finally, the electrical energy storage device 10, the motor vehicle 100 and the assembly method according to the invention can clearly be subjected to changes and variants, which, though, do not go beyond the scope of protection set forth in the appended claims.

In particular, the electrochemical cells 4 could be brought together along the direction Y or the direction Z. Thus, the electrochemical cells 4 and the foam elements 5a, 5b, 5c could be stacked together in a vertical direction.

The device 1 could comprise foam elements 5a, 5b, 5c of only two different types or foam elements 5a, 5b, 5c of more than three different types.

The electrochemical cells 4 could be of a different type from the pouch type. For example, the electrochemical cells could be cylindrical or prismatic cells.

The information encoded by the identifier 7 could also relate to other geometric or constructive parameters of the respective electrochemical cell 4. Similar considerations apply to the identifier of the heat dissipation elements 6.

The tolerance range of the thickness of the electrochemical cells 4 could be divided into two sub-ranges or into more than three sub-ranges. Similar considerations also apply to the tolerance range of the thickness of the heat dissipation elements 6.

Each module 10 could comprise more than one foam element 5a, 5b, 5c and/or more than one heat dissipation element 6.

The heat dissipation elements 6 could have a shape other than the parallelepiped shape.

Preferably, although the disclosure set forth above relates to the specific case in which the foam elements 5a, 5b, 5c have different thickness, elastic properties and chemical compositions, it is specified that the foam elements 5a, 5b, 5c could in general have:
- same thickness, but different chemical compositions and elastic properties;
- same thickness and same chemical composition, but with different elastic properties;
- same thickness and same elastic properties, but different chemical composition,
- same chemical composition, but different thickness and elastic properties;
- same chemical composition and same elastic properties, but different thickness; or
- same elastic properties, but different thickness and chemical composition.

The device 1 could also comprise further components; for example, the device 1 could comprise one or more electrically insulating elements and/or thermally insulating elements. In particular, the same considerations set forth above with reference to the thickness and to the tolerances of the heat dissipation elements 6 and to the overall thickness of the modules also apply to these further components.

## Claims

1. A device (1) for the storage of electrical energy for a motor vehicle (100); said device (1) comprising:
- a casing (2) defining an inner volume (3); and
- a plurality of electrochemical cells (4) housed in said inner volume (3) and brought together along a first direction (X);
**characterized in that** it comprises foam elements (5a, 5b, 5c) of at least a first type and a second type that are different from one another;
wherein said foam element of the first type (5a) is interposed between a first pair of said electrochemical cells (4) along said first direction (X) and said foam element of the second type (5b) is interposed between a second pair of said electrochemical cells (4) along said first direction (X).

2. The device according to claim 1, wherein said electrochemical cells (4) of said first pair are arranged consecutively with respect to each other along said first direction (X) and said electrochemical cells (4) of said second pair are arranged consecutively with respect to each other along said first direction (X);
wherein said foam element of the first type (5a) is in contact with both electrochemical cells (4) of said first pair and wherein said foam element of the second type (5b) is in contact with both electrochemical cells (4) of said second pair.

3. The device according to claim 1 or 2, wherein said foam element of the first type (5a) is in direct contact with both electrochemical cells (4) of said first pair along most of its extension along a second direction (Z); said second direction (Z) being orthogonal to said first direction (X);
wherein said foam element of the second type (5b) is in direct contact with both electrochemical cells (4) of said second pair along most of its extension along said second direction (Z).

4. The device according to any one of the foregoing claims, wherein said foam element of the first type (5a) and said foam element of the second type (5b) have respective different extensions along said first direction (X) and/or respective different elastic properties and/or respective different chemical compositions; and/or
wherein said foam element of the first type (5a) and said foam element of the second type (5b) have respective different thermal properties; and/or
wherein said foam element of the first type (5a) and/or said foam element of the second type (5b) are made of a polyurethane, silicone, ceramic, aerogel and/or glass fibre material.

5. The device according to any one of the preceding claims, comprising at least one of a heat dissipation element (6), an electrically insulating element and a thermally insulating element.

6. The device according to claim 5, comprising at least one of a said foam element of the first type (5a), a said foam element of the second type (5b), a said heat dissipation element (6), a said electrically insulating element and a said thermally insulating element between each pair of said electrochemical cells (4) arranged consecutively with respect to each other along said first direction (X).

7. The device according to claim 6, wherein only one of said foam element of the first type (5a) and said foam element of the second type (5b) is present between each pair of said electrochemical cells (4) arranged consecutively with respect to each other along said first direction (X).

8. The device according to any one of the preceding claims, wherein at least some of said electrochemical cells (4) comprise an identifier (7) configured to encode information and to provide said information when interrogated, in use, by a reader device;
wherein said information is correlated with the actual thickness and/or the extension of the respective electrochemical cell (4) along said first direction (X).

9. The device according to any one of claims 5 to 8, wherein at least one of said heat dissipation element (6), said electrically insulating element and said thermally insulating element comprises a further identifier configured to encode information and to provide said information when interrogated, in use, by a reader device;
wherein said information is correlated with the actual thickness and/or the extension of the heat dissipation element (6), said electrically insulating element or said thermally insulating element along said first direction (X).

10. A motor vehicle (100) comprising an electrical energy storage device (1) according to any one of the preceding claims.

11. A method for assembling an electrical energy storage device (1); said device (1) comprising a casing (2) defining an inner volume (3);
said method comprising the steps of:
i) providing at least two electrochemical cells (4);
ii) choosing a foam element (5a, 5b) between at least a foam element of a first type (5a) and a foam element of a second type (5b);
iii) interposing said foam element (5a, 5b) between said electrochemical cells (4) along a direction (X), forming an assembly (10);
iv) placing said assembly (10) formed by said electrochemical cells (4) and said foam element (5a, 5b) chosen during step ii) in said inner volume (3).

12. The method according to claim 11, wherein said step iii) comprises arranging said foam element (5a, 5b) in contact with both said electrochemical cells (4).

13. The method according to claim 11 or 12, comprising the further step v) of detecting and/or determining a geometric parameter of an electrochemical cell (4) or of both said electrochemical cells (4);
wherein said step ii) is carried out as a function of said geometric parameter of one said electrochemical cell (4) or of both said electrochemical cells (4).

14. The method according to any one of claims 11 to 13, wherein said foam element of the first type (5a) and said foam element of the second type (5b) have respective different extensions along said direction (X) and/or respective different elastic properties and/or respective different chemical compositions.

15. The method according to claim 13 or according to claim 14, when it depends on claim 13, wherein, during step ii), the choice of said foam element (5a, 5b) is made as a function of an average value among the geometric parameters of said at least two electrochemical cells (4).

16. The method according to any one of the claims 11 to 15, comprising the further step vi) of inserting at least one further component (6) among a heat dissipation element (6), an electrically insulating element and a thermally insulating element in said inner volume (3).

17. The method according to claim 16, comprising the step vii) of detecting and/or determining a geometric parameter of said further component (6);
wherein said step ii) comprises choosing said foam element (5a, 5b) between said foam element of the first type (5a) and said foam element of the second type (5b) also as a function of the geometric parameter of said further component (6).

18. The method according to any one of the claims 13 to 17, wherein said geometric parameter is the actual thickness and/or an extension and/or a distance of at least one said electrochemical cell (4) and/or said further component (6) parallel to said direction (X).

19. The method according to any one of claims 13 to 18, wherein said step v) comprises interrogating an identifier (7) of a said electrochemical cell (4) or of both said electrochemical cells (4) to receive information encoded into said identifier (7);
wherein said step vii) comprises interrogating a further identifier of said further component (6) to receive information encoded into said further identifier;
wherein said information encoded into said identifier (7) and/or said further identifier is correlated with the geometric parameter of said at least one electrochemical cell (4) and/or said further component (6).

20. The method according to any one of claims 16 to 19, wherein at the end of step iii) and of step vi), said assembly (10) comprises at least one of a said foam element of the first type (5a), a said foam element of the second type (5b) and a said further component (6) between each pair of said electrochemical cells (4) arranged consecutively with respect to each other along said first direction (X).

21. The method according to any one of the claims from 13 to 20, comprising the step viii) of predetermining a foam element of a first type (5a) and a foam element of a second type (5b) that can be chosen during said step iii) as a function of said geometric parameter;
said step viii) comprising:
- checking that a stack comprising a plurality of said electrochemical cells (4), the geometric parameter of which belongs to a first range of values, and a plurality of foam elements of the first type (5a) is subjected to a compression force that meets a first control criterion and that the extension of said stack along the direction of said compression force meets a second control criterion;
- checking that a stack comprising a plurality of said electrochemical cells (4), the geometric parameter of which belongs to a second range of values, and a plurality of foam elements of the second type (5b) is subjected to a compression force that meets said first control criterion and that the extension of said stack along the direction of said compression force meets said second control criterion;
said second range of values being different from said first range of values.

22. The method according to claim 21, wherein said first control criterion entails that said compression force is greater than a minimum value and smaller than a maximum value and the said second control criterion entails that the extension of said stack along the direction of said compression force is smaller than or equal to a dimension threshold value; said dimension threshold value being correlated with the dimensions of said inner volume (3).
